# FASCICULE DE BREVET EUROPEEN

(11) **EP 2 791 444 B1**
(45) Date de publication et mention de la délivrance du brevet: **11.12.2019**
(21) Numéro de dépôt: 12810389.2
(22) Date de dépôt: 14.12.2012
(51) Int. Cl.: E05B 73/00

(54) **SYSTÈME DE DÉVERROUILLAGE MAGNETIQUE DE TAG ANTIVOL**
ENTSPERRUNGSVORRICHTUNG EINES ANTIDIEBSTAHLETIKETTS
UNLOCKING SYSTEM FOR ANTI-THEFT TAG

(30) Priorité: 14.12.2011 FR 1161652
(43) Date de publication de la demande: 22.10.2014
(73) Titulaire: Exaqtworld, 94340 Joinville-le-Pont (FR)
(72) Inventeur: FAVIER, Alain, F-94130 Nogent Sur Marne (FR)
(74) Mandataire: Petit, Maxime
(86) Numéro de dépôt international: PCT/FR2012/052949
(87) Numéro de publication internationale: WO 2013/088093

(56) Documents cités:
- WO-A1-94/09235
- DE-U1-202004 013 895
- FR-A1- 2 955 413
- US-A- 4 774 503
- US-A- 5 069 047
- US-A- 5 426 419
- US-A1- 2009 139 279

## Description

L'invention est relative au déverrouillage magnétique d'un ensemble de protection contre le vol, notamment le vol à l'étalage, d'un article emballé ou non.
Pour lutter efficacement contre le vol à l'étalage et plus particulièrement contre le vol de certains produits comme les produits textiles (chemises, pulls, sous-vêtements, pantalons, lingerie, cravates, chaussettes, t-shirts, robes, manteaux, chapeaux, chaussures, polos, jupes entre autres), les commerçants utilisent de façon connue des badges antivol ou ensembles de protection contre le vol (également appelés bips, macarons ou «EAS tags» en terminologie anglo-saxonne). Ces badges antivol déclenchent un portique antivol ou un système de surveillance de type RFID disposé aux points d'accès (entrées/sorties) d'un point de vente tel qu'un magasin de type super ou hyper, une boutique, un magasin spécialisé, un duty-free, un grand-magasin, un musée, un vidéo club, une pharmacie, ainsi qu'aux points d'accès de tout autre magasin ou entité vendant ou exposant des articles en libre service qui sont susceptibles d'être volés ou soustraits sans autorisation.
Ces badges sont généralement formés de deux parties :
- un corps qui contient un système de verrouillage et un organe actif ou passif qui déclenche les antennes ou portiques de détection communément installés aux points d'accès des magasins,
- un clou qui traverse l'article à protéger (par exemple le tissu d'un vêtement) ou bien le carton ou le plastique des emballages ou blisters.

Dans les points de vente le personnel met en place les badges sur les articles à protéger.

Lorsqu'un article protégé passe en caisse, les deux parties du badge antivol sont séparées l'une de l'autre après déverrouillage du système de verrouillage.

Il existe plusieurs systèmes de verrouillage et plusieurs systèmes de déverrouillage associés.

Il existe en particulier des systèmes de verrouillage des deux parties du badge antivol qui nécessitent, pour le déverrouillage, un déverrouillage magnétique.

Le déverrouillage magnétique est réalisé, lors du passage en caisse, par le personnel du magasin qui pose le badge antivol sur la surface de déverrouillage d'un dispositif de déverrouillage magnétique comportant un ou plusieurs aimants permanents.

Le champ magnétique produit par ce ou ces aimants déverrouille le système de verrouillage du badge antivol et libère ainsi les deux parties l'une de l'autre, ainsi que l'article emprisonné entre elles.

Toutefois, la Demanderesse s'est aperçue que l'opération de déverrouillage peut se révéler fastidieuse : il n'est pas rare que l'employé du magasin s'y reprenne à plusieurs fois pour déverrouiller le système en procédant par tâtonnements pour trouver la bonne orientation du badge antivol par rapport à la surface de déverrouillage et, donc, par rapport à la direction du champ magnétique généré par le dispositif.

Le système de verrouillage ne peut en effet être déverrouillé que s'il est positionné suivant une orientation géométrique bien précise par rapport à l'orientation du champ magnétique.

L'opération de déverrouillage est souvent rendue plus difficile encore par le fait que le badge antivol est fixé à un article à protéger qui peut être volumineux (vêtement...) et dissimuler complètement la surface de déverrouillage, et même son environnement proche, aux yeux de l'employé.

Par ailleurs, les badges antivol peuvent, lorsqu'ils sont équipés d'organes actifs ou passifs de détection contre le vol (ex : circuits de type LC, LCR...) interagissant avec un système extérieur (ex : portique antivol à l'entrée d'un magasin), être déséquilibrés. En particulier, la présence dans l'une des deux parties du badge d'un noyau en ferrite et d'une bobine enroulée autour du noyau provoque naturellement un déséquilibre mécanique du badge.

Ainsi, lorsque le badge est placé sur la surface de déverrouillage il s'incline naturellement sur le côté et n'est donc pas positionné suivant la bonne orientation qui autorise le déverrouillage magnétique du badge.

Ce déséquilibre est accrû lorsque la forme de la partie du badge antivol qui est placé sur la surface de déverrouillage est convexe et lisse (de forme générale arrondie, pas nécessairement sphérique ni hémisphérique).

Une telle forme est donc instable car dépourvue d'arêtes susceptibles d'arrêter le mouvement de basculement ou roulement de la partie du badge sur la surface plane horizontale de déverrouillage.

L'employé doit ainsi redresser le badge afin de l'amener dans la bonne orientation, ce qui lui prend du temps.

De surcroît, lorsque l'article auquel est attaché le badge masque la surface de déverrouillage, l'opération est rendue encore plus longue et difficile.

En outre, les aimants utilisés pour le déverrouillage sont de plus en plus puissants. L'intensité du champ peut ainsi aller jusqu'à 16 000 ou 17 000 Gauss.

Il s'ensuit que l'employé du magasin rencontre de plus en plus de difficultés pour redresser le badge antivol soumis à un champ magnétique d'une telle intensité et ainsi procéder à son déverrouillage (ouverture)

Cette opération peut également avoir des conséquences fâcheuses pour l'article à protéger tel qu'un vêtement (textile...) puisque l'employé doit souvent lutter contre l'attraction magnétique et donc exercer un effort sur le badge et sur le vêtement lors du redressement du badge. Ainsi, le vêtement peut être endommagé.

Certains types de systèmes de verrouillage et de déverrouillage utilisent des billes magnétiques et un ressort magnétique poussant dans un sens sur les billes qui emprisonnent entre elles, à l'intérieur d'une partie du badge, la pointe de l'autre partie du badge. Le déverrouillage est obtenu en attirant les billes et le ressort en sens opposé, en alignant l'axe du ressort et celui du champ magnétique.

Or, avec des aimants de plus en plus puissants le badge antivol est attiré et maintenu avec une grande force contre la surface de déverrouillage. En raison de la grande intensité de la force d'attraction le ressort est maintenu dans une orientation géométrique inclinée par rapport à la surface et non perpendiculaire à celle-ci. Sa partie supérieure située sous les billes tend alors à se déformer transversalement.

Ainsi, lorsque l'employé redresse le badge, le ressort déformé n'est plus rectiligne et n'est donc plus aligné avec l'axe du champ magnétique, rendant par là même très difficile, voire impossible, le déverrouillage.

Au vu de ce qui précède il serait donc souhaitable de faciliter l'opération de déverrouillage magnétique d'un badge antivol.

Le document WO 94/09235 décrit un système antivol.

Le document FR 2 955 413 décrit un ensemble de protection contre le vol d'un article commercial.

Le document US 2009/139279 décrit un dispositif de sécurité à plusieurs verrous et un dispositif de détachement pour être utilisé avec le dispositif de sécurité.

Le document US 4 774 503 décrit un tag antivol.

Le document DE 20 2004 013895 décrit un dispositif de sécurité avec des verrous magnétiques individuels variables.

Selon un premier aspect, la présente invention concerne un système de déverrouillage magnétique, comprenant :
- un ensemble de protection contre le vol d'un article emballé ou non, l'ensemble comprenant deux parties verrouillées l'une à l'autre par insertion axiale d'une pointe d'une première partie dans un orifice d'une deuxième partie qui comporte des moyens de verrouillage de la pointe insérée,
- un dispositif de déverrouillage magnétique de l'ensemble de protection qui comporte :
   - un boîtier renfermant au moins un aimant permanent,
   - une surface de déverrouillage munie de moyens de réception et de stabilisation mécanique de l'ensemble, lesdits moyens étant conçus pour recevoir au moins la deuxième partie de l'ensemble et la stabiliser suivant une orientation prédéterminée, ladite orientation prédéterminée permettant au champ magnétique (B) qui est généré par ledit au moins un aimant permanent, perpendiculairement à la surface de déverrouillage, de déverrouiller magnétiquement les deux parties de l'ensemble de protection,
      - les moyens de réception et de stabilisation mécanique définissant un logement central pour recevoir au moins la deuxième partie de l'ensemble de protection, la forme dudit logement étant sensiblement complémentaire de celle de ladite au moins deuxième partie de l'ensemble de protection, caractérisé en ce que la deuxième partie présente au moins une ouverture distincte de l'orifice pour recevoir la pointe de la première partie et l'y maintenir de manière à pouvoir soulever les deux parties de l'ensemble en tenant uniquement la première partie.

Les moyens de réception et de stabilisation mécanique confèrent, de façon systématique, à l'ensemble de protection (badge, antivol) reçu par ceux-ci une orientation géométrique (orientation spatiale) prédéterminée qui est celle autorisant le déverrouillage des deux parties de cet ensemble. L'article ou son emballage emprisonné entre les deux parties est alors libéré.

Le déverrouillage de l'ensemble de protection est ainsi grandement facilité puisqu'il suffit de positionner cet ensemble sur les moyens de stabilisation pour pouvoir séparer automatiquement les deux parties et libérer l'article.

Cette opération s'avère plus rapide que dans l'art antérieur.

En outre, l'opération de déverrouillage est également simplifiée même si l'employé du magasin présent en caisse ne voit pas la surface de déverrouillage et les moyens de stabilisation associés à cause de la présence de l'article (par exemple un vêtement) auquel est fixé l'ensemble de protection. En effet, il suffit que l'employé amène l'ensemble de protection au-dessus de la surface de déverrouillage équipée des moyens de réception et de stabilisation pour que cet ensemble soit attiré par le ou les aimants vers les moyens de réception et de stabilisation et s'y loge de façon automatique, sans avoir à procéder par tâtonnements en cas d'absence de visibilité. En se positionnant ainsi dans les moyens de réception et de stabilisation, l'ensemble de protection prend alors, automatiquement et de façon certaine, l'orientation spatiale prédéterminée autorisant son ouverture.

On notera que les moyens de réception et de stabilisation sont conçus pour rendre difficile l'extraction de la deuxième partie de l'ensemble de protection une fois que le déverrouillage a eu lieu et que la première partie a été retirée.

La configuration de la deuxième partie de l'ensemble de protection (ouverture(s) distincte(s) de l'orifice d'insertion axiale de la pointe) porte en elle-même les moyens qui vont permettre d'extraire la deuxième partie des moyens de réception et de stabilisation lorsque, après déverrouillage, la première partie aura été retirée et l'article détaché. Ces moyens sont efficaces lorsque le champ magnétique est puissant.

Le dispositif de déverrouillage ne comporte donc pas de mécanisme compliqué (motorisé...) pour extraire la deuxième partie comme c'est le cas dans le document US 5063047 avec une pièce mobile axialement qui provoque un soulèvement sur commande.

Selon l'invention, les moyens de réception et de stabilisation mécanique définissent un logement central pour recevoir au moins la deuxième partie de l'ensemble de protection, la forme dudit logement étant sensiblement complémentaire de celle de ladite au moins deuxième partie de l'ensemble de protection.

Le logement recevant au moins une partie de l'ensemble de protection confère à ce dernier une orientation spatiale adaptée au déverrouillage magnétique de ses deux parties.

La forme du logement est sensiblement complémentaire de celle de ladite au moins une partie de l'ensemble de protection afin que cette dernière s'ajuste dans le logement de la façon la plus précise possible. Ainsi logée, la partie (deuxième partie) ne fait pas saillie en dehors du logement, ce qui rend toute prise impossible. L'extraction de cette partie est alors rendue très difficile.

On notera que le logement possède idéalement la forme complémentaire pour que ladite partie épouse la forme interne du logement.

Toutefois, dans certains cas la forme du logement n'est pas strictement complémentaire de celle de ladite partie, par exemple pour des raisons de fabrication.

Cependant, pour assurer la fonction de stabilisation la forme du logement est complémentaire de celle de ladite partie de l'ensemble de protection sur la grande majorité de sa surface concave interne.

Cette forme du logement a par exemple une forme d'entonnoir ou de cuvette.

Selon une caractéristique possible, le logement a un fond disposé en vis-à-vis de la surface de déverrouillage et une ouverture du côté opposé au fond, le fond et l'ouverture étant disposés de façon opposée suivant une direction axiale perpendiculaire à la surface de déverrouillage magnétique.

On notera que la forme du logement est complémentaire de celle de ladite au moins une partie de l'ensemble de protection sur la majorité de sa surface interne, notamment à proximité de l'ouverture du logement et en direction du fond.

Le fond et l'ouverture du logement étant ainsi orientés axialement, ladite au moins une partie de l'ensemble de protection insérée dans le logement adopte l'orientation spatiale souhaitée pour le déverrouillage.

Selon une caractéristique possible, les moyens de réception et de stabilisation comportent au moins une paroi annulaire délimitant (entourant) au moins partiellement le logement central.

Selon une autre caractéristique possible, des échancrures sont pratiquées dans ladite au moins une paroi annulaire de façon à interrompre localement celle-ci ou à réduire localement la dimension axiale appelée hauteur de ladite au moins une paroi annulaire, la dimension axiale étant perpendiculaire à la surface de déverrouillage magnétique horizontale. On notera que la paroi adopte ainsi une forme ondulée. Ceci permet de faciliter la préhension de l'ensemble de protection ou d'une partie (deuxième partie) de celui-ci une fois qu'il ou elle a été placé dans le logement.

Une échancrure permet de faire basculer sur un côté la partie restée dans le logement en utilisant un doigt ou l'autre partie (première partie avec la pointe) de l'ensemble.

En d'autres termes les échancrures permettant d'avoir accès à une portion de la partie restée dans le logement et ainsi facilitent son extraction.

Selon une caractéristique possible, deux échancrures sont pratiquées de façon diamétralement opposée dans ladite au moins une paroi annulaire. Un tel agencement permet de positionner deux doigts d'une même main pour extraire la partie de l'ensemble de protection restée dans le logement.

Selon une autre caractéristique possible, les moyens de réception et de stabilisation comportent une paroi annulaire ininterrompue entourant le logement.

Ainsi, ladite au moins une partie de l'ensemble de protection positionnée dans le logement s'avère plus difficile à extraire lorsque la paroi annulaire entourant le logement est continue.

Selon une caractéristique possible, ladite au moins une paroi annulaire présente une dimension axiale appelée hauteur qui s'étend suivant une direction axiale perpendiculaire à la surface de déverrouillage magnétique.

Selon une autre caractéristique possible, ladite hauteur est sensiblement égale à la dimension ou hauteur de la partie de l'ensemble de protection qui est destinée à être insérée dans le logement.

Lorsque la paroi annulaire entourant le logement est ininterrompue et que sa hauteur est celle de ladite partie remplissant le logement, la préhension de cette partie s'avère très difficile après déverrouillage.

Selon une autre caractéristique possible, ladite paroi annulaire est pourvue à son extrémité libre supérieure d'un bord périphérique formant un décroché radial interne par rapport à ladite paroi annulaire afin de la surélever.

Selon une caractéristique possible, ladite paroi annulaire pourvue du bord périphérique de surélévation présente une dimension axiale appelée hauteur qui s'étend suivant une direction axiale perpendiculaire à la surface de déverrouillage magnétique horizontale, augmentant ainsi la hauteur du logement.

Selon une autre caractéristique possible, ladite hauteur est sensiblement égale à la dimension ou hauteur de tout l'ensemble de protection qui est destiné à être inséré dans le logement.

Selon une autre caractéristique possible, ladite au moins une paroi annulaire est pourvue à son extrémité libre supérieure d'une bague de protection montée sur des moyens élastiques et formant un bord périphérique mobile axialement entre une première position haute d'extension surélevant la paroi annulaire fixe (et augmentant la hauteur du logement) et une deuxième position basse rétractée par rapport à la paroi annulaire fixe, les moyens élastiques exerçant un effort axial permanent sur la bague de protection qui tend à la maintenir en position haute d'extension.

Selon une autre caractéristique possible, ladite paroi annulaire pourvue de la bague de protection présente une dimension axiale appelée hauteur qui s'étend suivant une direction axiale perpendiculaire à la surface de déverrouillage horizontale.

Selon une autre caractéristique possible, ladite hauteur est sensiblement égale à la dimension ou hauteur de tout l'ensemble de protection qui est destiné à être inséré dans le logement.

Lorsque la paroi annulaire entourant le logement est ininterrompue et qu'elle est surélevée, soit par un bord périphérique de surélévation, soit par une bague de protection tels que brièvement exposés ci-dessus, il est très difficile à un utilisateur d'extraire ladite au moins une partie de l'ensemble de protection qui reste dans le logement après déverrouillage des deux parties dudit ensemble. La présence d'une ou de plusieurs ouvertures distinctes de l'orifice dans la deuxième partie restée dans le logement permet l'extraction de celle-ci grâce à l'intervention de la première partie.

Selon une caractéristique possible, le logement central a un fond qui est percé et débouche directement sur la surface de déverrouillage. Cet agencement favorise le placement de ladite au moins une partie de l'ensemble de protection aussi près que possible dudit au moins un aimant permanent.

Cet agencement favorise ainsi l'efficacité du déverrouillage magnétique.

Selon une caractéristique possible, les moyens de réception et de stabilisation mécanique sont montés sur la surface de déverrouillage de manière amovible ou fixe.

Le caractère amovible des moyens de réception et de stabilisation permet au dispositif de déverrouillage d'être équipé de plusieurs types de moyens de stabilisation adaptés chacun à un ensemble de protection de configuration différente (interchangeabilité des moyens).

Selon une autre caractéristique possible, les moyens de réception et de stabilisation sont formés d'une seule pièce, facilitant ainsi la construction du stabilisateur et sa mise en place.

Selon une autre caractéristique possible, l'ensemble de protection comprend un système de verrouillage des deux parties comportant les moyens de verrouillage qui sont déverrouillables magnétiquement par déplacement desdits moyens suivant un axe dit de déverrouillage sous l'action d'un champ magnétique de même axe.

Selon une caractéristique possible, les moyens de réception et de stabilisation mécanique sont configurés pour orienter l'axe de déverrouillage des moyens de verrouillage dans une direction parallèle à l'axe du champ magnétique généré par ledit au moins un aimant permanent du dispositif de déverrouillage magnétique.

L'orientation conférée par le logement des moyens de réception et de stabilisation à ladite au moins une partie de l'ensemble de protection reçue dans ce logement permet d'orienter l'axe de déverrouillage de façon favorable à un déverrouillage des moyens de verrouillage de l'ensemble de protection.

Selon une caractéristique possible, les moyens de verrouillage comprennent un ou plusieurs éléments en matériau magnétique coopérant avec la pointe insérée afin d'empêcher le retrait axial de celle-ci.

Selon une autre caractéristique possible, les éléments en matériau magnétique sont des billes entourant la pointe et disposées dans un même plan à l'intérieur d'une pièce en forme d'entonnoir qui s'étend suivant un axe dit d'entonnoir, les billes étant montées sur des moyens élastiques en matériau amagnétique qui tendent à pousser lesdites billes vers la partie la plus étroite de la pièce en forme d'entonnoir suivant ledit axe d'entonnoir.

L'axe d'entonnoir et l'axe de déverrouillage sont identiques et, en positionnant l'axe d'entonnoir parallèlement à l'axe du champ magnétique généré par ledit au moins un aimant permanent du dispositif de déverrouillage, les billes sont attirées par le champ magnétique et sont extraites de la partie la plus étroite en forme d'entonnoir, libérant ainsi la pointe.

Les deux parties de l'ensemble de protection sont de cette façon séparées l'une de l'autre.

Selon une caractéristique possible, la deuxième partie comprend une première portion munie de l'orifice pour l'insertion axiale de la pointe de la première partie dans ladite deuxième partie (corps) et une deuxième portion dans laquelle la pointe insérée s'étend au moins en partie et y est verrouillée.

Selon une caractéristique possible, la première portion présente ladite au moins une ouverture distincte de l'orifice pour insérer la pointe de la première partie dans une portion creuse de la deuxième portion, la portion creuse étant conçue pour recevoir la pointe et l'y maintenir dans une position dite d'assemblage non verrouillée des deux parties de l'ensemble de protection, cette position étant telle qu'un utilisateur peut séparer les deux parties l'une de l'autre sans outil (en tirant simultanément avec les doigts sur les deux parties dans les sens opposés).

Cette ouverture (ou ces ouvertures) est par exemple utilisée pour retirer la deuxième partie de l'ensemble de protection restée dans le logement après séparation des deux parties de l'ensemble de protection. Pour cela, la pointe de la première partie est introduite dans l'ouverture ou dans l'une des ouvertures jusqu'à fixer temporairement les deux parties et la première partie est ensuite relevée, emmenant ainsi avec elle la deuxième partie.

Ceci est particulièrement utile lorsque la paroi annulaire ininterrompue présente une hauteur égale ou supérieure à celle de la partie de l'ensemble de protection coincée dans le logement.

C'est en particulier le cas lorsque la paroi annulaire est surélevée par un bord périphérique ou une bague de protection.

Selon une caractéristique possible, la surface externe de ladite au moins une partie de l'ensemble de protection est convexe et lisse.

Comme déjà mentionné, une telle particularité de la surface externe amplifie l'instabilité de l'ensemble de protection sur une surface de déverrouillage qui est plane ou qui n'est pas adaptée à la forme de cet ensemble.

L'instabilité est générée par la présence dissymétrique des organes antivol logés dans au moins l'une des deux parties de l'ensemble.

L'utilisation d'un champ magnétique puissant ne facilite pas le redressement et le maintien en position verticale de l'ensemble de protection en vue du déverrouillage.

Les moyens de réception et de stabilisation mécanique selon l'invention tels qu'exposés suivant plusieurs formes ci-dessus procurent une solution au nouveau problème spécifique exposé plus haut.

Selon une autre caractéristique possible, le logement central a une forme générale de cuvette ayant une surface interne qui est lisse.

Une telle forme permet d'épouser la forme convexe et lisse de la surface externe de ladite au moins une partie (ex : deuxième partie) de l'ensemble de protection et ainsi de la stabiliser en lui conférant l'orientation géométrique souhaitée.

Selon un autre aspect, l'invention vise un procédé de déverrouillage magnétique d'un ensemble de protection contre le vol d'un article emballé ou non, caractérisé en ce que l'ensemble de protection comprend deux parties verrouillées l'une à l'autre par insertion axiale d'une pointe d'une première partie dans un orifice d'une deuxième partie qui comporte des moyens de verrouillage de la pointe insérée, la deuxième partie présentant au moins une ouverture distincte de l'orifice pour recevoir la pointe de la première partie et l'y maintenir, le procédé comprenant les étapes suivantes :
- positionnement d'au moins une partie de l'ensemble de protection attaché à l'article sur une surface de déverrouillage d'un dispositif de déverrouillage magnétique qui comprend au moins un aimant permanent,
- stabilisation mécanique de ladite au moins une partie de l'ensemble suivant une orientation prédéterminée, ladite orientation prédéterminée permettant au champ magnétique qui est généré par ledit au moins un aimant permanent, perpendiculairement à la surface de déverrouillage, de déverrouiller magnétiquement les deux parties de l'ensemble de protection,
- déverrouillage magnétique de l'ensemble de protection,
- séparation des deux parties de l'ensemble de protection par soulèvement de la première partie, la deuxième partie restant en position stabilisée mécaniquement,
- retrait de l'article,
- le procédé comprend en outre les étapes suivantes :
   - insertion axiale de la pointe de la première partie dans ladite au moins une ouverture de la deuxième partie stabilisée mécaniquement jusqu'à obtenir une position axiale de la pointe insérée pour laquelle les deux parties sont assemblées mécaniquement l'une à l'autre de façon non verrouillée,
   - préhension de la première partie et soulèvement de celle-ci, entrainant ainsi dans ce mouvement la deuxième partie assemblée avec la première partie.

L'extraction est ainsi effectuée grâce à la seule configuration des deux parties de l'ensemble de protection, sans avoir besoin de déplacer la deuxième partie au moyen d'un mécanisme lourd et complexe qui complexifie considérablement le dispositif de déverrouillage magnétique (découpleur) ; les moyens de stabilisation peuvent être réalisés en une pièce.

Ce procédé comporte les mêmes avantages que ceux mentionnés ci-dessus en relation avec le système et ils ne seront donc pas répétés.

Selon une autre caractéristique possible, la deuxième partie est maintenue en position stabilisée mécaniquement dans un logement dont la forme est sensiblement complémentaire de la forme extérieure de ladite deuxième partie, rendant ainsi difficile son extraction.

Selon une autre caractéristique possible, lorsque la pointe de la première partie est insérée axialement dans ladite au moins une ouverture, la première et la deuxième partie sont décalées transversalement l'une par rapport à l'autre par référence à une position dite axiale de verrouillage dans laquelle les deux parties sont alignées axialement l'une avec l'autre lorsque la pointe est insérée axialement dans l'orifice ; la partie (première partie) ainsi décalée et disposée en dehors des moyens de stabilisation (ex : logement) constitue une prise manuelle qui facilite sa préhension et, donc, son soulèvement.

D'autres caractéristiques et avantages apparaîtront au cours de la description qui va suivre, donnée uniquement à titre d'exemple non limitatif et faite en référence aux dessins annexés, sur lesquels :
- les figures 1 à 3 et 5 illustrent un premier mode de réalisation, qui ne fait pas partie de l'invention, d'un système comprenant un dispositif de déverrouillage magnétique équipé de moyens de stabilisation mécanique ;
- la figure 4 illustre un système comprenant un dispositif de déverrouillage magnétique sans moyens de stabilisation mécanique ;
- la figure 6 illustre un mode de réalisation d'un ensemble de protection ou badge antivol selon l'invention ;
- les figures 7a et 7b illustrent la mise en situation de l'ensemble de la figure 6 sur le dispositif de déverrouillage du premier mode de réalisation ;
- les figures 8 et 9 illustrent la mise en situation de deux variantes de l'ensemble de protection de la figure 6 sur le dispositif de déverrouillage du premier mode de réalisation ;
- les figures 10 et 11 illustrent respectivement un dispositif de déverrouillage magnétique et des moyens de stabilisation mécanique selon un deuxième mode de réalisation qui ne fait pas partie de l'invention ;
- la figure 12 illustre la mise en situation d'un ensemble de protection sur le dispositif de la figure 10 équipé des moyens de la figure 11 ;
- les figures 13 et 14 illustrent respectivement une variante de réalisation des moyens de stabilisation mécanique de la figure 11 et le dispositif de la figure 10 équipé de tels moyens ;
- la figure 15 illustre la mise en situation d'un ensemble de protection sur le dispositif de la figure 14 ;
- les figures 16 et 17 illustrent un système comprenant un dispositif de déverrouillage pourvu de moyens de stabilisation mécanique selon un troisième mode de réalisation selon l'invention mettant en situation une partie d'un ensemble de protection encastré dans son logement (figure 16) et l'utilisation de l'autre partie de cet ensemble pour l'extraire de ce logement (figure 17) ;
- la figure 18 illustre un système comprenant un dispositif de déverrouillage équipé de moyens de stabilisation mécanique selon un quatrième mode de réalisation et mettant en situation un ensemble de protection attaché à un article à protéger ;
- la figure 19 illustre l'utilisation de l'une des parties de cet ensemble pour extraire l'autre partie dudit ensemble coincée au fond du logement des moyens de stabilisation ;
- les figures 20a et 20b illustrent un système comprenant un dispositif de déverrouillage pourvu de moyens de stabilisation mécanique selon un cinquième mode de réalisation, qui ne fait pas partie de l'invention, sans ensemble de protection ;
- la figure 21 illustre une mise en situation d'un ensemble de protection attaché à un article et positionné dans le logement des moyens de stabilisation de la figure 20a ;
- la figure 22 représente l'une des parties de l'ensemble de protection coincée au fond du logement des moyens de stabilisation après séparation des deux parties de l'ensemble ;
- les figures 23 et 24 illustrent l'utilisation de l'autre partie de l'ensemble de protection pour extraire du logement la partie de l'ensemble qui y est coincée.

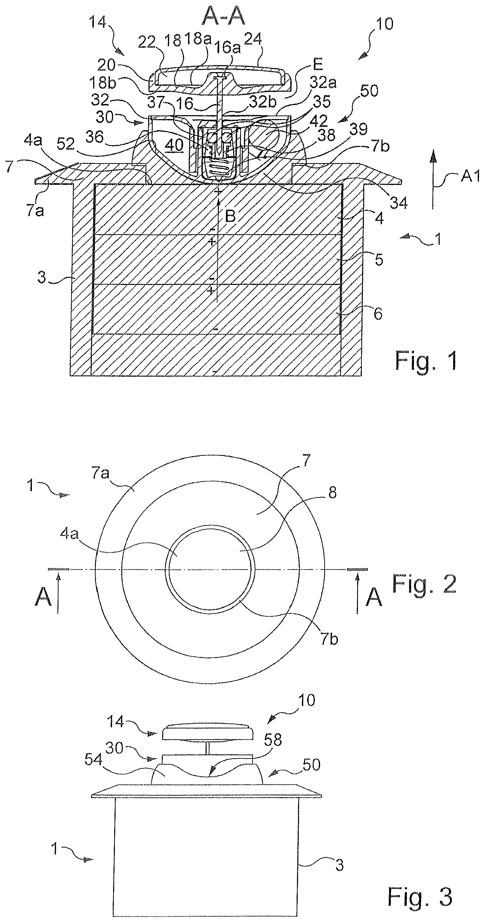

Comme représenté à la figure 1 et désigné par la référence générale notée 1, un dispositif de déverrouillage magnétique, également appelé découpleur, permet de déverrouiller magnétiquement un ensemble de protection contre le vol d'un article, par exemple un article commercial. Cet ensemble référencé 10 est également appelé badge antivol.

Le dispositif de déverrouillage et le badge antivol forment un système de déverrouillage magnétique.

Le badge antivol 10 sera décrit après le dispositif 1.

Le dispositif de déverrouillage 1 comprend un boîtier 3 qui renferme à l'intérieur une pluralité d'aimants permanents 4, 5 et 6 dont les pôles Nord et Sud ont été schématiquement illustrés par des signes «+» et «-» respectivement.

L'agencement de ces aimants permet de créer un champ magnétique permanent vertical B comme illustré par la flèche sur la figure 1.

Le boîtier 3 comporte une paroi entourant presque entièrement l'ensemble des aimants 4 à 6 à l'exception toutefois d'une zone supérieure évidée aménagée dans la partie centrale d'une paroi supérieure horizontale 7 du boîtier.

La zone centrale évidée 8 est illustrée sur la figure 2 qui est une vue de dessus du dispositif 1 seul.

La paroi supérieure 7 comporte une partie périphérique externe 7a formant collerette et qui est destinée à venir en appui au-dessus d'un plan horizontal non représenté sur la figure et destiné à l'installation du dispositif 1, par exemple à côté d'une caisse d'un magasin.

La paroi 7 comporte également un rebord périphérique interne supérieur 7b sur une partie seulement de sa hauteur et qui entoure la zone centrale 8.

Le dispositif 1 comporte une surface de déverrouillage 4a accessible par l'ouverture de la zone 8 et qui correspond ici à la face supérieure de l'aimant permanent supérieur 4.

Cette surface de déverrouillage est perpendiculaire à la direction axiale du champ magnétique B (confondu ici avec la direction verticale).

On va maintenant décrire en référence à la figure 1 le badge antivol 10.

Comme représenté de façon schématique à la figure 1, le badge antivol 10 comprend une première partie comportant une tête 14 munie d'une pointe 16 destinée à traverser l'article (vêtement ...) ou un emballage de type par exemple blister contenant l'article.

Plus particulièrement, la tête comprend une première portion 18 ayant une forme générale de plateau dans la partie centrale duquel est montée une extrémité 16a de la pointe qui forme la tête de cette dernière.

On notera que la partie centrale du plateau 18 est plus épaisse que la partie restante de ce dernier afin d'y loger la tête 16a de la pointe.

La portion formant le plateau 18 comporte un rebord annulaire 20 qui s'étend en direction opposée de la pointe de façon à former un logement interne 22 délimité partiellement par le fond du plateau18a et partiellement par le rebord annulaire 20.

On notera que la portion formant le plateau 18 comporte une face 18b opposée à la face 18a et à partir de laquelle s'étend sensiblement perpendiculairement le corps de la pointe 16.

Un élément de protection 24 tel qu'un capot ferme le logement 22 en prenant appui sur la face interne du rebord annulaire 20, par exemple en venant s'insérer sur un épaulement formé sur cette face et non représenté.

Le logement 22 comporte par exemple une pastille imprimée visible depuis l'extérieur de la tête 14 en raison des propriétés optiques (par exemple transparence) du capot ou fenêtre 24.

Le badge antivol comprend également une deuxième partie 30 ayant un corps formant un boîtier qui, dans l'exemple représenté sur la figure 1, comprend deux portions.

Une première portion 32 s'apparente à une plaque de forme sensiblement plane ayant une première face 32a dans laquelle est aménagé un orifice 32b traversant l'épaisseur de la plaque pour l'insertion de la pointe 16 en mode d'assemblage verrouillé conventionnel.

La deuxième partie 30 comporte également une deuxième portion 34 de forme générale convexe qui prend ici, par exemple, la forme d'un dôme ou d'une forme sensiblement hémisphérique.

Cette deuxième portion est dans l'ensemble creuse afin d'y loger un certain nombre d'éléments et présente dans un plan équatorial une ouverture pour l'introduction des éléments dans le corps de la deuxième partie 30. L'ouverture est ici obturée par la plaque 32.

La deuxième portion 34 comprend une cavité centrale 36 dans laquelle sont disposés des moyens de verrouillage qui sont destinés à empêcher le retrait de la pointe 16 lorsque celle-ci est introduite à travers l'orifice d'insertion 32b.

Les moyens de verrouillage comprennent un ou plusieurs éléments en matériau magnétique logés dans la cavité centrale 36 et qui coopèrent avec la pointe 16 insérée afin d'empêcher son retrait axial.

Sur la figure 1, les deux parties 14 et 30 sont représentées en position verrouillée avec un écartement E entre elles. Cet écartement est nécessaire pour la présence de l'article à protéger et qui est emprisonné entre les deux parties. Par souci de clarté, l'article traversé par la pointe 16 n'a pas été représenté.

Les moyens de verrouillage sont par exemple des moyens de verrouillage à billes tels que représentés sur la Figure 1.

De tels moyens comprennent par exemple plusieurs billes 35 placées dans une pièce en forme d'entonnoir 37 à l'intérieur de la cavité 36, dans un même plan et qui ménagent entre elles un espace central pour recevoir la pointe 16.

La pièce 37 s'étend suivant un axe dit d'entonnoir qui est représenté par la référence A1 à droite de la Figure 1 par souci de clarté.

La seconde portion 34 comprend également en périphérie de la cavité 36 une chambre annulaire 40 dans laquelle est agencée un organe 42, voire plusieurs organes, par exemple passifs, c'est-à-dire qui sont aptes chacun à recevoir des ondes électromagnétiques provenant d'une source extérieure à l'ensemble de protection 10.

Un tel organe peut par exemple prendre la forme d'un circuit résonnant de type LC.

De façon alternative, le boîtier peut renfermer un ou plusieurs organes actifs, c'est-à-dire qui sont susceptibles d'émettre des ondes électromagnétiques de l'intérieur vers l'extérieur de l'ensemble de protection.

On notera que de tels organes actifs ou passifs sont, par exemple, des bobines avec ferrite avec ou sans condensateur, des circuits LCR, des filaments magnétiques, des circuits de type RFID dotés d'une puce à mémoire active ou passive... Ce ou ces organes coopèrent, via la transmission d'ondes électromagnétiques, avec un système de détection externe, tel qu'un portique ou une antenne placé à un point d'accès du magasin où est mis en vente le ou les articles à protéger afin de déclencher une alarme de détection de l'ensemble de protection au niveau du point d'accès.

Pour la clarté de l'exposé, seul l'organe 42 a été représenté sur la figure 1. Il s'agit par exemple d'un noyau en ferrite autour duquel est enroulée une bobine (L). Un condensateur (LC) et éventuellement une résistance (LCR) peuvent s'y ajouter.

Dans une variante non représentée, de tels organes passifs ou actifs sont placés dans la première partie 14 du badge antivol.

Les billes 35 sont montées sur un support 38 en matériau amagnétique, lequel est monté sur des moyens élastiques en matériau amagnétique, tels qu'un ressort 39. Les moyens élastiques 39 exercent sur le support 38 et donc sur les billes un effort axial (suivant A1) qui tend à les pousser davantage dans la partie la plus étroite de l'entonnoir 37.

Lorsque la pointe 16 est insérée dans l'espace entre les billes 35, les billes se calent dans la partie convergente de l'entonnoir située près de la plaque 32.

Toute tentative de retrait axial de la pointe tend à enfoncer davantage les billes dans la partie convergente de l'entonnoir et donc à bloquer encore plus la pointe.

On notera que les billes 35 sont métalliques et, plus particulièrement sont réalisées dans un matériau magnétique, ce qui permet de les extraire de la partie convergente de l'entonnoir 37 sous l'action d'un champ magnétique externe tel que celui généré par les aimants 4 à 6 du dispositif 1.

On notera que les moyens de verrouillage à billes et la pointe forment un système de verrouillage du badge antivol 10.

Le déverrouillage des moyens de verrouillage du badge 10 est rendu possible lorsque l'axe d'entonnoir A1 (également appelé axe de déverrouillage) est aligné avec la direction axiale d'un champ magnétique, à savoir le champ magnétique vertical de la figure 1.

Dans ces conditions, le champ magnétique exerce sur les billes 35 un effort d'attraction axial qui tend à comprimer les moyens élastiques 39 (suivant la verticale descendante), abaissant ainsi le support 38 et les billes en appui sur ce dernier. La pointe 16 est alors libérée des billes, ce qui permet le retrait axial de cette pointe et donc la séparation des deux parties du badge ainsi que la libération de l'article emprisonné entre ces dernières.

On notera que ce déverrouillage n'est possible que si l'axe d'entonnoir ou axe de déverrouillage A1 possède la même orientation géométrique ou spatiale que l'axe du champ magnétique généré par le ou les aimants du dispositif 1.

La figure 1 illustre l'alignement géométrique ou spatial de ces axes.

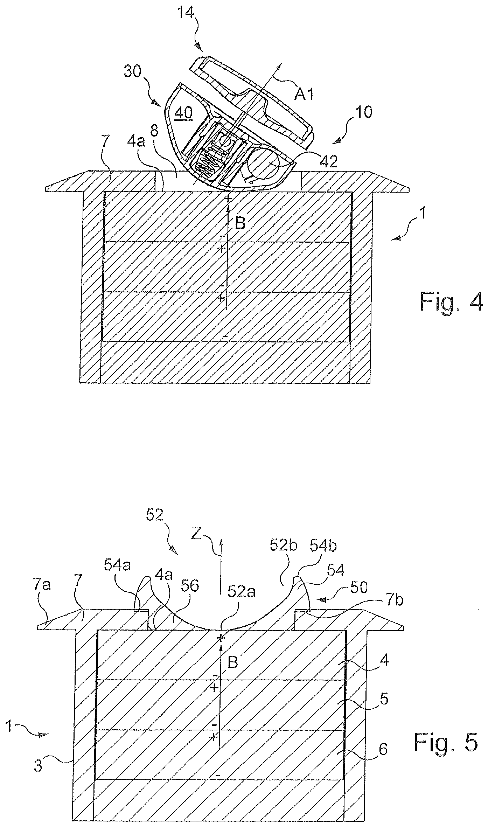

La figure 4 illustre un cas de figure où l'axe de déverrouillage A1 n'est pas parallèle à l'axe du champ magnétique B qui est généré par le dispositif de déverrouillage 1.

En effet, l'article à protéger non représenté sur cette figure mais qui est normalement emprisonné entre les deux parties du badge dissimule aux yeux de l'employé du magasin, la surface de déverrouillage 4a au fond de la zone 8.

La position du badge 10 sur cette surface 4a a été volontairement exagérée sur la figure 4 afin de comprendre que lorsque l'orientation de l'axe de déverrouillage A1 ne correspond pas à celle du champ magnétique B le déverrouillage ne peut pas avoir lieu.

Avant de trouver la bonne orientation géométrique du badge l'employé peut perdre un temps considérable.

Une intensité de champ magnétique élevée de l'ordre de 16000 Gauss ou plus complique davantage cette tâche.

On notera que le badge antivol 10 qui vient d'être décrit n'est pas un badge de l'art antérieur, seul le dispositif de déverrouillage 1 de la figure 4 fait partie de l'art antérieur.

Pour remédier au problème exposé ci-dessus, le dispositif 1 comporte des moyens de réception et de stabilisation mécanique du badge afin de lui conférer une orientation géométrique ou spatiale prédéterminée. En l'espèce, cette orientation est celle consistant à aligner l'axe déverrouillage A1 sur l'axe du champ magnétique généré par le ou les aimants du dispositif 1, c'est-à-dire à disposer l'axe A1 perpendiculairement à la surface 4a.

Lorsqu'un un employé d'un magasin souhaite libérer l'article emprisonné entre les deux parties du badge antivol, il positionne la deuxième partie inférieure 30 du badge au-dessus des moyens de réception et de stabilisation mécanique 50 équipant le dispositif 1.

Les moyens 50 comprennent un logement central permettant d'y recevoir au moins une partie du badge. Le champ magnétique attire ensuite la deuxième partie 30 directement dans le logement où elle s'y cale automatiquement dans la bonne position/orientation.

L'employé peut par exemple toucher le logement avec un doigt pour y introduire, par exemple, la partie inférieure 30 du badge comme représenté sur les figures 1 et 3.

Toutefois, l'intensité du champ magnétique est telle (ex : 16000 Gauss environ) qu'en plaçant le badge au-dessus des moyens de stabilisation, le badge est attiré magnétiquement et donc automatiquement dans le logement.

Les moyens de stabilisation 50 sont donc configurés pour conférer au badge reçu dans leur logement 52 l'orientation prédéterminée souhaitée.

On notera toutefois que ce logement possède une forme complémentaire de la forme extérieure de la partie du badge destinée à être reçue dans ledit logement.

Dans l'exemple illustré sur la figure 1, la deuxième partie 30 du badge a une forme convexe arrondie, par exemple en forme de dôme, et le logement 52 présente donc une forme complémentaire concave (en forme de bol ou de cuvette avec l'ouverture orientée vers le haut) épousant la forme convexe de la partie 30.

Comme représenté sur la figure 5 illustrant le dispositif 1 pourvu des moyens de stabilisation 50 sans badge antivol, le logement 52 présente un fond 52a disposé en vis-à-vis de la surface de déverrouillage 4a et, du côté opposé au fond, une ouverture 52b (ici circulaire) par laquelle le badge antivol peut être introduit dans le logement.

L'ouverture 52b et le fond 52a sont agencés, de façon opposée, suivant une direction axiale Z perpendiculaire à la surface de déverrouillage 4a et donc parallèle à l'axe du champ magnétique au voisinage de cette surface.

Comme représenté sur la figure 5, les moyens de stabilisation 50 comprennent une paroi annulaire 54 qui borde le logement central, cette paroi annulaire s'étendant suivant la direction axiale Z.

Les moyens de stabilisation prennent plus particulièrement la forme d'un corps de stabilisation qui comprend une base ou socle 56 occupant toute la zone centrale 8 (figure 2) laissée libre à l'intérieur de la paroi formant support 7.

La paroi annulaire 54 s'étend à partir de la base 56, suivant une première direction radiale externe, de manière à former un épaulement 54a qui s'engage sur le rebord supérieur 7b de la paroi 7 et, dans une deuxième direction axiale perpendiculaire (axe Z), qui prolonge le corps stabilisateur en éloignement de la base 56 et de la surface de déverrouillage 4a. La hauteur du logement est ainsi définie par la distance entre l'extrémité libre supérieure 54b de la paroi et le fond 52a.

Dans ce mode de réalisation, les moyens de stabilisation 50 sont montés de manière fixe sur le dispositif 1.

Toutefois, dans une variante, les moyens de stabilisation peuvent être aménagés de façon amovible sur la surface de déverrouillage du dispositif de déverrouillage.

Comme représenté sur la figure 3, la paroi 54 qui entoure le logement 52 dans lequel est logé le badge 10 (comme dans un nid) n'est pas ininterrompue mais présente localement des échancrures telles que celle référencée 58.

Dans ce mode de réalisation, qui ne fait pas partie de l'invention, le stabilisateur comporte deux échancrures qui sont aménagées de façon diamétralement opposée dans la paroi annulaire 54, conférant ainsi au stabilisateur une forme ondulée constituée d'une alternance de creux (échancrures) et de bosses.

On notera que les échancrures peuvent être plus ou moins prononcées.

Par exemple, à l'extrême les échancrures s'étendent sur toute la hauteur de la paroi annulaire et forment ainsi deux portions de paroi (segments d'anneau) disjointes.

Plus de deux échancrures sont alternativement envisageables.

Dans le mode de réalisation illustré sur les figures 1 à 3 et 5, qui ne fait pas partie de l'invention, la paroi annulaire 54 a une hauteur inférieure à celle de la partie 30 du badge antivol qui comporte les moyens de verrouillage à billes et qui est destinée à être positionnée dans le logement 52 en vue du déverrouillage magnétique et de la séparation des deux parties.

Si la paroi 54 était ininterrompue sur tout son pourtour il serait très difficile à un employé de magasin d'extraire du logement la partie 30 du badge antivol dès lors que la partie 14 a été retirée.

Toutefois, grâce aux échancrures 58 l'employé peut faire basculer sur l'un des côtés comportant une échancrure la partie 30 dans son logement.

Ainsi, en appuyant avec le doigt sur la partie 30 à l'un des endroits où se situe une échancrure 58 cette zone de la partie 30 va s'abaisser tandis qu'au niveau de l'échancrure opposée la zone opposée de la partie 30 va se relever, permettant alors aisément à l'employé de se saisir du corps de la partie 30.

Par ailleurs, le fond 52a du logement 52 est percé, ce qui permet de favoriser le positionnement de la deuxième partie 30 du badge antivol aussi près que possible des aimants permanents.

En l'occurrence, le fond percé permet à la deuxième partie 30 représentée sur la figure 1 d'entrer en contact avec la surface de déverrouillage magnétique 4a et ainsi de profiter davantage de l'action du champ magnétique pour le déverrouillage.

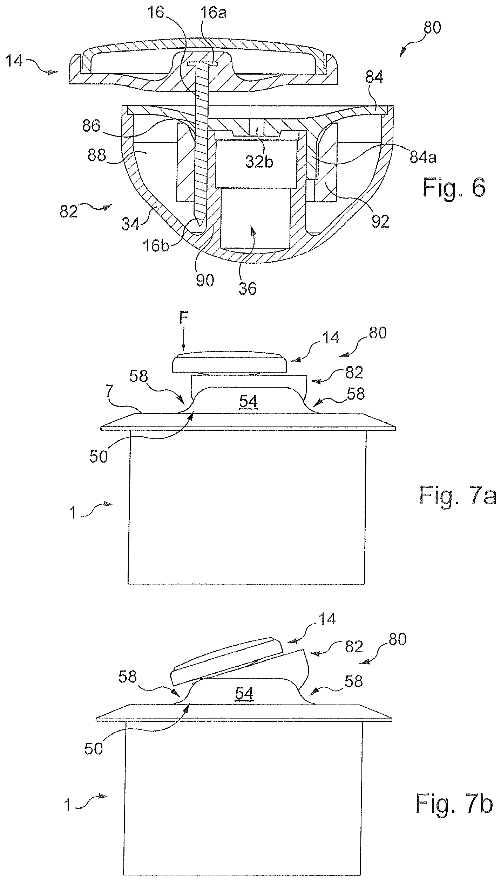

Les figures 6 et 7a-b illustrent un mode de réalisation selon l'invention, dans lequel le badge antivol diffère de celui des figures 1, 3 et 4.

Les références des éléments déjà décrits en relation avec les figures 1, 3 et 4 et qui sont repris ici sont conservées.

Le badge antivol 80 de la figure 6 diffère du badge 10 par la présence, dans la deuxième partie 82 du badge (la première partie 14 est inchangée) d'une ouverture qui est distante de l'orifice d'insertion de la pointe pour le verrouillage des deux parties.

La deuxième partie 82 du badge antivol 80 comprend une plaque 84 similaire à la plaque 32 de la figure 1 mais qui en diffère par la présence de l'ouverture 86 distincte de l'orifice d'insertion 32b et qui est excentrée par rapport à ce dernier.

Cette ouverture traverse l'épaisseur de la plaque et est agencée parallèlement à l'orifice d'insertion 32b.

L'ouverture 86 est prévue pour assembler ou accoupler de façon temporaire la première partie 14 avec la deuxième partie 82 sans faire intervenir le mécanisme de verrouillage des deux parties.

Cet assemblage temporaire permet ensuite à un utilisateur de séparer les deux parties l'une de l'autre en exerçant un simple effort d'écartement en tenant chacune des parties dans l'une de ses mains, sans avoir besoin d'un quelconque outil.

Comme représenté sur la figure 6, la pointe 16 est introduite axialement dans l'ouverture 86 et s'étend à l'intérieur d'une portion creuse aménagée dans la chambre annulaire 88 entourant la cavité centrale 36.

La pointe 16 est engagée sur la majeure partie de sa longueur afin que l'extrémité libre 16b soit disposée à l'intérieur de la portion creuse du boîtier.

Ce dernier comprend une paroi centrale 90 qui s'étend à partir de la paroi 34 dudit boîtier qui est opposée à la plaque 84.

Cette paroi périphérique 90 entoure la cavité centrale 36.

Un organe interne au boîtier est prévu à l'intérieur de celui-ci (dans la chambre annulaire 88) pour exercer sur la pointe 16 un effort mécanique latéral tendant à empêcher un retrait axial trop aisé de cette pointe.

Cet organe peut prendre différentes formes à l'intérieur du boîtier telles qu'une languette s'étendant à partir d'une des parois du boîtier et dont l'élasticité lui permet de bloquer temporairement la pointe.

Toutefois, dans le mode de réalisation de la figure 6 un autre type d'organe interne est prévu pour coopérer avec la pointe 16 afin d'empêcher un retrait intempestif de celle-ci.

Cet organe interne constitue ici une pièce rapportée, ce qui présente l'avantage d'introduire très peu de modifications lors de la fabrication du boîtier.

Du côté interne au boîtier de la deuxième partie 82, la plaque 84 comporte dans sa partie centrale une portion saillante 84a de forme générale cylindrique, entourant sur la quasi-totalité de sa circonférence interne la paroi cylindrique 90 délimitant la cavité centrale 36.

La partie saillante 84a forme en quelque sorte un moyeu autour de la paroi cylindrique 90 à l'exception de la zone située à proximité de l'ouverture 86 (à l'aplomb de celle-ci) qui est interrompue localement pour permettre l'agencement de la pointe 16 contre la face extérieure de la paroi 84a.

Un organe interne 92 en forme de bague annulaire (ou de rondelle) entoure le moyeu 84a et est emmanché en force autour de celui-ci avant que la plaque 84 ne soit installée en position pour fermer le boîtier à la façon d'un couvercle.

Cet organe est par exemple réalisé dans un matériau élastique tel qu'un caoutchouc.

La pointe 16 est ensuite insérée dans l'ouverture 86, puis est glissée là où une zone du moyeu 84a est enlevée (rainure), entre la bague 92 et la paroi 90.

La pointe 16 est ainsi emmanchée en force dans cette portion creuse située à l'intérieur de la deuxième partie 82 et dont les dimensions sont suffisamment proches de celles de la pointe pour empêcher un retrait axial trop aisé.

Dans cette position la première partie 14 est décalée transversalement/latéralement par rapport à la deuxième partie 82, par rapport à une configuration axiale centrée telle que celle de la figure 1 (la pointe 16 est insérée dans l'orifice central d'insertion).

Cette position d'immobilisation et d'assemblage temporaire permet de déplacer les deux parties du badge antivol 80 l'une avec l'autre sans risquer de les désassembler par inadvertance ou par maladresse.

Lorsque le badge antivol 80 est placé dans les moyens de stabilisation 50 des figures 1, 3, et 5 le déverrouillage magnétique peut être effectué comme expliqué ci-dessus. Les deux parties 14 et 82 du badge 80 peuvent alors être séparées l'une de l'autre, libérant ainsi l'article emprisonné entre celle-ci.

Afin de faciliter le retrait de la deuxième partie 82 du badge qui est restée dans le logement 52 des moyens de stabilisation 50, l'ouverture excentrée 86 du badge de la figure 6 est utilisée pour recevoir la pointe 16 de la première partie 14 et ainsi assembler ou accoupler de façon temporaire les deux parties comme représenté sur les figures 6 et 7a.

Sur la figure 7a, la première partie 14 a été repositionnée au-dessus de la deuxième partie 82 qui est en prise dans les moyens de stabilisation mécanique 50, à la façon d'un couvercle excentré ou décalé transversalement/latéralement.

Comme représenté sur la figure 7a, l'utilisateur (par exemple l'employé du magasin) exerce alors sur la périphérie de la première partie 14 un effort descendant F excentré, cet effort étant appliqué au-dessus d'une des échancrures 58.

Sous l'action de cet effort le badge 80 bascule et est alors incliné comme illustré sur la figure 7b, permettant ainsi de faire ressortir au niveau de l'autre échancrure opposée 58 une plus grande portion du badge. Ceci facilite la préhension du badge par les doigts de l'utilisateur.

En particulier, en procédant ainsi le doigt de l'utilisateur peut avoir accès à la zone inférieure de la deuxième partie 82 qui auparavant était en vis-à-vis du fond du logement.

La tâche de l'utilisateur pour retirer la deuxième partie 82 du badge est ainsi grandement simplifiée.

On notera que les moyens de stabilisation mécanique lorsqu'ils ne sont pas amovibles peuvent faire partie intégrante du boîtier du dispositif 1 et, ainsi, être réalisés d'un seul tenant avec la paroi supérieure horizontale 7.

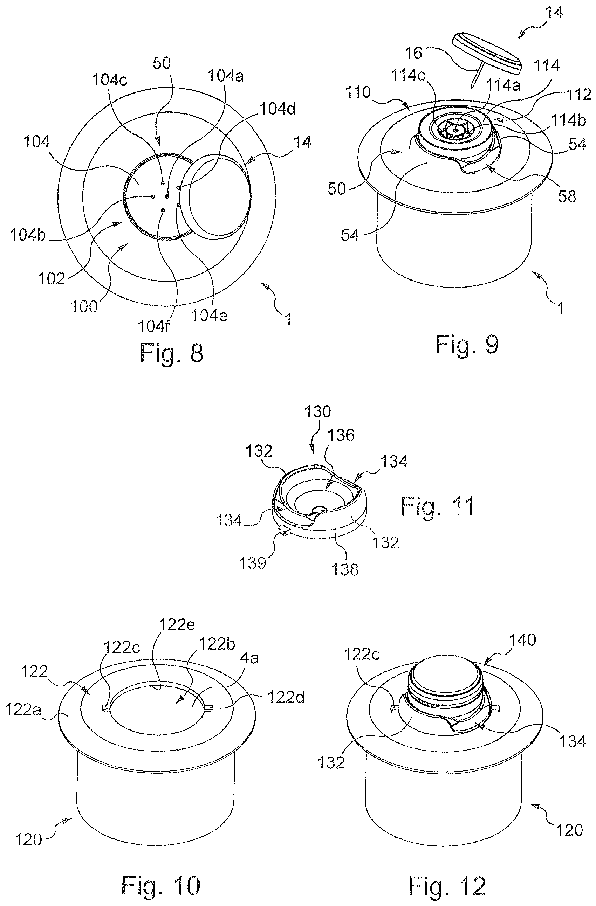

Les figures 8 et 9 illustrent deux variantes de réalisation d'un badge antivol coopérant avec le dispositif de déverrouillage 1 pourvu des moyens de stabilisation mécanique 50.

Sur la figure 8, les moyens de stabilisation ne sont pas visibles dans la mesure où le badge 100 est positionné sur ces moyens.

Plus particulièrement, le badge 100 comprend une première partie identique à la première partie 14 portant la pointe 16 et une deuxième partie 102 qui est placée sur les moyens de stabilisation, notamment dans le logement interne aménagé dans ces derniers.

La deuxième partie 102 comporte une plaque 104 fermant l'ouverture permettant d'accéder à l'intérieur du boîtier constituant la deuxième partie 102 et dans lequel sont aménagés, notamment, les moyens de verrouillage des deux parties ainsi que le ou les organes qui sont aptes à recevoir des ondes électromagnétiques provenant d'une source extérieure au badge ou à émettre de telles ondes vers l'extérieur.

Dans la plaque 104 sont pratiqués un orifice central 104a pour l'insertion de la pointe de la première partie 14 (en vue du verrouillage) et, autour de celui-ci, à distance, une pluralité d'ouvertures 104b-f qui sont, à l'instar de l'ouverture 86 de la figure 6, destinées à recevoir la pointe afin d'accoupler temporairement les deux parties du badge.

Le moyen de fixation ou d'immobilisation de la pointe à l'intérieur du boîtier de la deuxième partie 102 peut être similaire à celui décrit en référence à la figure 6 ou être différent.

La pluralité d'ouvertures 104b-f permet de faciliter le positionnement de la pointe par rapport à une situation où la plaque ne comporte qu'une seule ouverture distincte de l'orifice d'insertion.

On notera que lorsque la pointe est insérée dans l'une de ces ouvertures l'ensemble ainsi accouplé procure les mêmes avantages que ceux décrits en référence aux figures 6, 7a et 7b.

La figure 9 illustre une autre variante de réalisation dans laquelle le badge antivol 110 comprend la même première partie 14 et une deuxième partie 112 qui est représentée en partie à l'intérieur du logement 52 défini par les moyens de stabilisation mécanique 50.

La deuxième partie 112 est ainsi maintenue en position par les deux portions de paroi annulaire 54 qui l'enserrent afin de lui conférer l'orientation souhaitée pour le déverrouillage des deux parties.

La deuxième partie 112 comporte, dans sa partie supérieure, une plaque 114 analogue à la plaque 104 de la figure 8 et assurant la même fonction d'obturation que cette dernière.

La plaque 114 comporte, dans sa partie centrale, un orifice d'insertion 114a pour l'insertion axiale de la pointe 16.

La plaque 114 comporte également dans une zone périphérique formant une ceinture autour de l'orifice d'insertion 114a une pluralité d'ouvertures analogues aux ouvertures 104b-f de la figure 8 et dont seulement deux, 114a et 114b, sont représentées sur la figure 9.

Plus particulièrement, la ceinture périphérique entourant l'orifice d'insertion 114a est structurée de façon à présenter une succession de creux et de saillies, les ouvertures 104b-f étant positionnées au fond des creux respectivement.

Cette zone périphérique en relief ou à différence de hauteur constitue une aide au positionnement de la pointe 16 de la première partie 14 dans l'une des ouvertures périphériques en vue d'un accouplement ou assemblage temporaire des deux parties l'une avec l'autre.

Cette variante permet également de procurer les mêmes avantages que ceux décrits en relation avec les figures 7a et 7b pour l'extraction du badge antivol hors du logement des moyens de réception et de stabilisation mécanique.

La figure 10 représente un autre mode de réalisation d'un dispositif de déverrouillage d'un badge antivol, qui ne fait pas partie de l'invention,.

Le dispositif de déverrouillage ou découpleur 120 comprend la même structure que celle décrite en référence à la figure 1 à l'exception toutefois de sa partie supérieure permettant d'accueillir des moyens de stabilisation mécanique d'un badge antivol.

En particulier, le dispositif 120 comprend une paroi supérieure horizontale munie à sa périphérie d'une collerette 122a et dont la partie centrale 122b est évidée comme pour la paroi 7 des figures 1 et 2.

La partie évidée définit un évidement de forme sensiblement cylindrique dont la hauteur correspond à la hauteur de la paroi 122 prise par rapport à la surface de déverrouillage 4a.

Deux encoches 122c, 122d diamétralement opposées sont pratiquées radialement dans la paroi 122 à la périphérie de l'évidement 122b.

Les moyens de stabilisation mécanique sont réalisés sous la forme d'un corps stabilisateur 130 illustré à la figure 11 et qui est destiné à équiper, de façon amovible, le dispositif 120 (figure 12).

Le corps stabilisateur 130 comporte, tout comme le corps des moyens de stabilisation 50, une paroi annulaire 132 interrompue localement en deux zones périphériques diamétralement opposées afin de former deux échancrures 134.

Ces deux portions de paroi annulaire 132 définissent entre elles un logement 136 pour recevoir et stabiliser un badge antivol 140 (figure 12) analogue aux badges antivol précédemment décrits.

Le corps stabilisateur 130 est pourvu à sa base 138 d'organes d'accrochage 139 destinés à s'engager dans les encoches 122c et 122d de la figure 10.

Le corps 130 comporte deux organes d'accrochage 139 diamétralement opposés dont seul un est visible sur la figure 11.

Ces organes d'accrochage font saillie par rapport à la base 138 et prennent par exemple la forme de pions ou d'ergots s'insérant respectivement dans les encoches 122c et 122d.

On notera que la partie centrale évidée 122b de la paroi 122 peut s'étendre radialement sur une petite distance sous cette dernière afin de former un rebord ou épaulement 122e.

Ainsi, lorsque le corps stabilisateur est mis en place sur le dispositif de la figure 10 les organes mâles 139 sont insérés dans les organes femelles ou encoches 122c et 122d. Le corps 130 est ensuite enfoncé dans la partie centrale évidée jusqu'à venir en contact avec la surface 4a et, par un mouvement de rotation du corps, les organes d'accrochage 139 viennent se bloquer sous le rebord 122e de la paroi 122.

Le système de montage se présente ainsi comme un système à baïonnette que l'on trouve notamment sur les appareils photographiques pour la fixation des objectifs.

On notera qu'une ou plusieurs butées peuvent être prévues sous le rebord afin de limiter la rotation du corps 130.

Le corps stabilisateur est ainsi monté de façon amovible sur le dispositif de déverrouillage 120 comme expliqué ci-dessus.

Le corps stabilisateur procure les mêmes avantages que ceux décrits en référence aux figures précédentes.

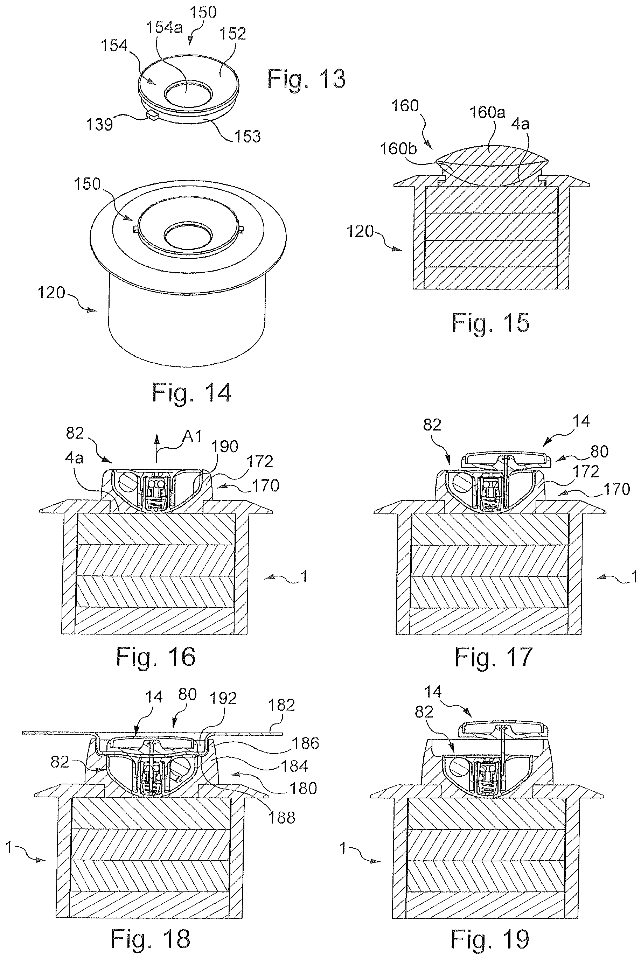

Les figures 13 à 15 illustrent une variante de réalisation d'un corps stabilisateur amovible par rapport au dispositif de déverrouillage 120.

Comme représenté sur la figure 13, le corps stabilisateur 150 est formé par une paroi annulaire ininterrompue 152 ayant une forme générale évasée orientée vers le haut et qui a, par exemple, la forme générale d'une coupelle.

Le corps comporte également un socle 153 pourvu à sa périphérie de deux organes d'accrochage 139 pour le montage dudit corps sur le dispositif 120 de façon identique à ce qui a été décrit en référence aux figures 10 à 12.

Le socle 153 est percé dans la partie centrale de façon à ce que le fond 154a du logement 154 défini par la paroi annulaire évasée 152 soit percé et en contact direct avec la surface de déverrouillage 4a. Le fond du logement 136 de la figure 11 est lui aussi percé pour les mêmes raisons.

La figure 14 illustre le corps stabilisateur 150 installé sur le dispositif 120.

La figure 15 représente de façon très schématique, en coupe axiale un badge antivol 160 positionné dans le logement 154 et épousant la forme de la paroi 152.

Le badge antivol 160 est également en deux parties, une partie supérieure 160a et une partie inférieure 160b qui sont verrouillées l'une avec l'autre par des moyens de verrouillage à billes (non représentés) comme décrit ci-dessus.

Les moyens de verrouillage à billes sont dans la partie inférieure 160b tandis que la pointe non représentée est dans partie 160a.

Ce badge a sensiblement la forme d'un ballon de rugby en coupe transversale.

Ce type de badge antivol est par exemple utilisé pour protéger des articles en textile.

La figure 16 illustre un autre mode selon l'invention des moyens de réception et de stabilisation mécanique.

Dans cet autre mode le dispositif 1 décrit en référence aux figures 1 à 5 est équipé de moyens de stabilisation mécanique 170 dont le corps comporte une paroi annulaire ininterrompue 172 qui présente une dimension axiale ou hauteur, prise perpendiculairement à la surface de déverrouillage 4a, sensiblement égale à la dimension axiale ou hauteur de la deuxième partie 82 du badge antivol 80.

Cette dimension axiale ou hauteur de la deuxième partie 82 est prise suivant l'axe de déverrouillage A1 ou axe d'entonnoir.

Comme représenté sur la figure 16, lorsque la première partie 80 du badge antivol a été séparée de la deuxième partie 82, cette dernière reste à l'intérieur du logement central interne à la paroi annulaire 172.

Dans la mesure où la partie inférieure 82 du badge antivol remplit complètement l'espace interne 190 (logement) à la paroi 172 et est agencée à fleur de paroi par rapport à cette paroi 172, l'utilisateur (employé de magasin) n'a aucune prise pour les doigts pour se saisir de cette partie.

Grâce à la présence de l'ouverture 86 du badge antivol 80 de la figure 6, la première partie 14 de ce dernier peut être insérée dans cette ouverture comme illustré sur la figure 17 (position décalée d'extraction).

En insérant en force la pointe à travers cette ouverture et à l'intérieur du boîtier de la partie 82 les deux parties du badge sont ainsi accouplées temporairement.

Il suffit ensuite à l'utilisateur de saisir le badge par la première partie 14 pour que la deuxième partie 82 qui y est fixée temporairement suive et soit ainsi extraite hors du logement des moyens de stabilisation.

La figure 18 illustre un autre mode de réalisation de moyens de stabilisation mécanique d'un badge antivol montés sur le dispositif de déverrouillage 1.

Le badge antivol est celui illustré sur la figure 6 qui comprend la première partie 14 et la deuxième partie 82.

Le badge antivol 80 est représenté sur la figure 18 enfoncé à l'intérieur des moyens de stabilisation mécanique 180 équipant le dispositif de déverrouillage 1.

Les deux parties 14 et 82 du badge antivol sont verrouillées l'une avec l'autre comme décrit précédemment et enserrent entre elles un article à protéger qui est ici représenté par un textile 182 (vêtement...).

La pointe du badge antivol transverse le textile dans son épaisseur, l'emprisonnant ainsi entre les deux parties du badge.

Le corps des moyens de stabilisation mécanique 180 comprend une paroi annulaire ininterrompue qui comporte une première partie similaire à la paroi 172 des figures 16 et 17 en ce qu'elle possède la même hauteur que celle de la deuxième partie 82 du badge.

Toutefois, la paroi 184 est plus large radialement que la paroi 172.

La paroi annulaire 184 est pourvue à son extrémité libre supérieure d'un bord périphérique 186 de plus faible épaisseur que celle de la paroi 184 afin de former un décroché radial ou épaulement vers l'extérieur par rapport à la paroi annulaire afin de surélever cette dernière.

Le décroché radial ou épaulement délimité par le bord périphérique 186 permet ainsi d'aménager entre le badge antivol 80 et le bord périphérique 186 un espace périphérique intérieur pour loger l'article 182.

Cet aménagement est utile lorsque l'article à protéger est déformable et peut donc être plié pour suivre le badge antivol dans l'espace interne 192 défini par la paroi surélevée du corps stabilisateur.

Comme représenté sur la figure 18, la paroi annulaire du corps stabilisateur est surélevée par rapport à celle des figures 16 et 17 afin que la hauteur de cette paroi soit sensiblement égale à celle du badge antivol 80 lorsque celui emprisonne un article à protéger ou l'emballage de ce dernier.

Une fois que le badge antivol a été mis en place dans le logement du corps stabilisateur il adopte alors automatiquement l'orientation géométrique souhaitée pour que le déverrouillage magnétique intervienne, libérant ainsi la première partie 14 que l'employé du magasin peut alors retirer.

L'article 182 de cette manière peut être remis au client du magasin l'ayant acheté.

Toutefois, lorsque la première partie 14 et l'article ont été enlevés la deuxième partie 82 du badge reste emprisonnée à l'intérieur du logement central du corps stabilisateur comme illustré sur la figure 19.

La présence de l'ouverture 86 permet, tout comme pour le mode de réalisation illustré sur les figures 16 et 17, de retirer la deuxième partie 82 de son logement.

On notera que pour les modes de réalisation des figures 16 à 19 les badges antivol des variantes des figures 8 et 9 peuvent également être utilisés.

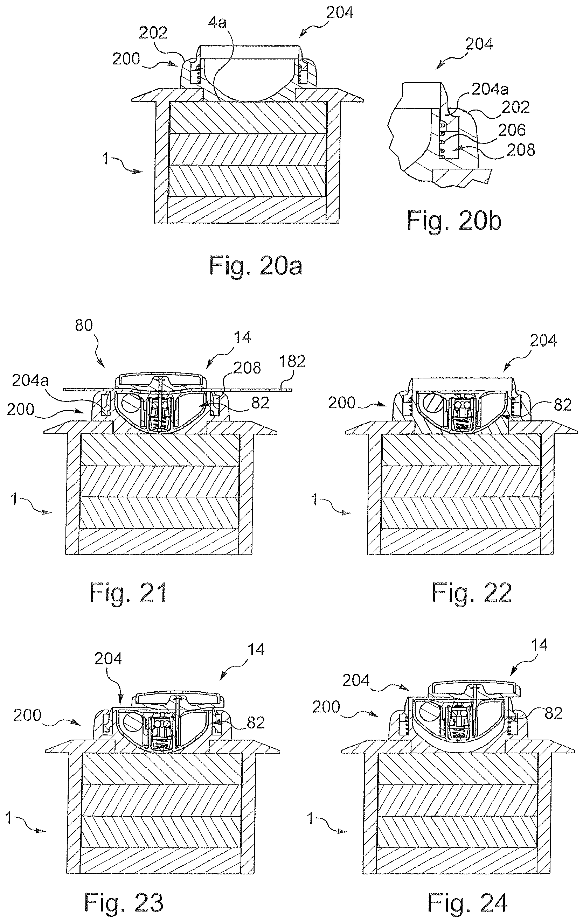

Les figures 20a et 20b illustrent un autre mode de réalisation de moyens de stabilisation mécanique d'un badge antivol qui ne fait pas partie de l'invention sans l'ensemble de protection.

Des moyens de stabilisation mécanique 200 sont montés de manière amovible ou non sur le dispositif de déverrouillage magnétique 1.

Ces moyens comprennent un corps qui possède une paroi 202 plus épaisse que la paroi 172 de la figure 16 mais sensiblement de même hauteur que cette dernière.

La paroi annulaire 202 est pourvue à son extrémité libre supérieure d'une bague de protection 204 qui est montée sur des moyens élastiques 206 tels qu'un ressort.

Comme représenté sur les figures 20a et 20b (vue partielle agrandie) les moyens élastiques sont aménagés dans une gorge annulaire 208 pratiquée dans l'épaisseur de la paroi 202 afin d'y loger les moyens élastiques 206.

La bague 204 comporte à sa périphérie externe un rebord inférieur 204a qui s'insère dans la gorge 208 et coopère avec les moyens élastiques 206.

La bague 204 est apte à se déplacer axialement (ici verticalement) par rapport à la paroi annulaire fixe, sans mécanisme supplémentaire (moteur...), entre une première position haute d'extension, représentée sur la figure 20b, (la bague prolonge axialement la paroi annulaire 202) et une deuxième position basse rétractée, illustrée sur la figure 21 qui sera décrite ci-après. L'axe suivant lequel la bague de protection se déplace est perpendiculaire à la surface de déverrouillage 4a.

Les moyens élastiques exercent un effort axial permanent sur le rebord périphérique 204a qui tend à pousser ce dernier en butée dans la partie supérieure de la gorge, maintenant ainsi la bague 204 dans sa position haute d'extension où elle surélève la paroi annulaire 202.

Sur la figure 20a aucun badge antivol n'est installé dans le logement du corps stabilisateur.

La figure 21 illustre la mise en place dans le logement du corps stabilisateur du badge antivol 80 dont les deux parties 14 et 82 sont verrouillées l'une à l'autre et enserrent entre elles un article 182 tel qu'un textile.

Lorsque l'employé du magasin positionne la deuxième partie 82 du badge dans le logement interne du corps stabilisateur la présence de l'article à protéger entre les deux parties exerce une pression sur la bague 204 tendant à compenser l'effort exercé par les moyens élastiques 206.

En appuyant ainsi manuellement sur la bague celle-ci adopte une position basse illustrée sur la figure 21 dans laquelle le rebord 204a se trouve au fond de la gorge 208.

Le badge antivol ayant ainsi l'orientation spatiale souhaitée (parallélisme entre l'axe de déverrouillage et l'axe du champ magnétique créé par le dispositif 1), le déverrouillage magnétique des deux parties 14 et 82 a lieu et l'employé peut retirer la première partie 14 pour libérer l'article 182.

Dès lors, la bague 204 n'est plus soumise à aucune pression et, poussée par les moyens élastiques 206, remonte naturellement dans sa position haute de la figure 20a (figure 22).

La deuxième partie 82 du badge antivol reste néanmoins emprisonnée dans le logement du corps stabilisateur et dissimulée par la bague qui rend encore plus difficile l'extraction que sur les figures 16 et 17.

De façon analogue à ce qui a été décrit en référence aux figures 17 et 19, la première partie 14 du badge antivol est utilisée pour extraire la deuxième partie 82 bloquée dans le logement du corps stabilisateur.

Comme représenté sur les figures 23 et 24, l'ouverture additionnelle 86 est utilisée pour accoupler de façon temporaire les deux parties 14 et 82.

Lorsque la première partie 14 est approchée de la deuxième partie 82 pour venir y insérer la pointe, la première partie 14 entre en contact avec la bague annulaire de protection 204 et abaisse celle-ci jusqu'à sa position basse rétractée de la figure 21.

La figure 23 illustre la bague en position basse lorsque la pointe de la première partie 14 est insérée à l'intérieur de la deuxième partie 82 et que la première partie 14 décalée latéralement repose sur la bague annulaire 204.

Il suffit alors à l'employé de se saisir de la première partie 14 et de la soulever pour que la deuxième partie 82 soit extraite verticalement du logement comme représenté sur la figure 24.

Lors de ce mouvement, l'appui de la première partie 14 sur la bague annulaire cesse et cette dernière revient alors naturellement dans sa position haute d'extension, telle que celle déjà décrite en référence à la figure 20a.

## Revendications

1. Système de déverrouillage magnétique, comprenant :
- un ensemble (10 ;80) de protection contre le vol d'un article emballé ou non, l'ensemble comprenant deux parties (14, 30 ; 14, 82) verrouillées l'une à l'autre par insertion axiale d'une pointe (16) d'une première partie dans un orifice (32b) d'une deuxième partie (30 ; 82) qui comporte des moyens de verrouillage (35, 37, 38) de la pointe insérée,
- un dispositif de déverrouillage magnétique (1) de l'ensemble de protection (10) qui comporte :
• un boîtier (3) renfermant au moins un aimant permanent (4, 5, 6),
• une surface de déverrouillage (4a) munie de moyens de réception et de stabilisation mécanique (50) de l'ensemble (10 ; 80), lesdits moyens étant conçus pour recevoir au moins la deuxième partie de l'ensemble (10 ; 80) et la stabiliser suivant une orientation prédéterminée, ladite orientation prédéterminée permettant au champ magnétique (B) qui est généré par ledit au moins un aimant permanent, perpendiculairement à la surface de déverrouillage, de déverrouiller magnétiquement les deux parties de l'ensemble de protection,
- les moyens de réception et de stabilisation mécanique définissant un logement central (52) pour recevoir au moins la deuxième partie (30 ; 82) de l'ensemble de protection, la forme dudit logement étant sensiblement complémentaire de celle de ladite au moins deuxième partie de l'ensemble de protection, **caractérisé en ce que** la deuxième partie (82) présente au moins une ouverture (86) distincte de l'orifice (32b) pour recevoir la pointe (16) de la première partie et l'y maintenir de manière à pouvoir soulever les deux parties de l'ensemble en tenant uniquement la première partie.

2. Système selon la revendication 1, **caractérisé en ce que** le logement a un fond (52a) disposé en vis-à-vis de la surface de déverrouillage et une ouverture (52b) du côté opposé au fond, le fond et l'ouverture étant disposés de façon opposée suivant une direction axiale (Z) perpendiculaire à la surface de déverrouillage magnétique (4a).

3. Système selon la revendication 1 ou 2, **caractérisé en ce que** les moyens de réception et de stabilisation comportent au moins une paroi annulaire (54) délimitant au moins partiellement le logement central.

4. Système selon l'une des revendications 1 à 3, **caractérisé en ce que** le logement central (52) a un fond (52a) qui est percé et débouche directement sur la surface de déverrouillage magnétique (4a) .

5. Système selon l'une des revendications 1 à 4, **caractérisé en ce que** les moyens de réception et de stabilisation mécanique sont montés sur la surface de déverrouillage (4a) de manière amovible ou fixe.

6. Système selon l'une des revendications 1 à 5, **caractérisé en ce que** les moyens de réception et de stabilisation mécanique sont formés d'une seule pièce.

7. Système selon l'une des revendications 1 à 6, **caractérisé en ce que** l'ensemble de protection (10 ; 80) comprend un système de verrouillage des deux parties comportant les moyens de verrouillage (35, 37, 38) qui sont déverrouillables magnétiquement par déplacement desdits moyens suivant un axe dit de déverrouillage (A1) sous l'action d'un champ magnétique de même axe.

8. Système selon la revendication 7, **caractérisé en ce que** les moyens de réception et de stabilisation mécanique sont configurés pour orienter l'axe de déverrouillage (A1) des moyens de verrouillage dans une direction parallèle à l'axe du champ magnétique (B) généré par ledit au moins un aimant permanent du dispositif de déverrouillage magnétique.

9. Système selon l'une des revendications 1 à 8, **caractérisé en ce que** les moyens de verrouillage (35, 37, 38) de la deuxième partie (30) comprennent un ou plusieurs éléments en matériau magnétique (35) coopérant avec la pointe (16) insérée afin d'empêcher le retrait axial de celle-ci.

10. Système selon la revendication 9, **caractérisé en ce que** la deuxième partie (30 ; 82) comprend une première portion (32) munie de l'orifice (32b) pour l'insertion axiale de la pointe de la première partie dans ladite deuxième partie et une deuxième portion (34) dans laquelle la pointe insérée s'étend au moins en partie et y est verrouillée.

11. Système selon la revendication 10, **caractérisé en ce que** la première portion (32) présente ladite au moins une ouverture (86) distincte de l'orifice (32b) pour insérer la pointe de la première partie (14) dans une portion creuse de la deuxième portion (30 ; 82), la portion creuse étant conçue pour recevoir la pointe (16) et l'y maintenir dans une position dite d'assemblage non verrouillée des deux parties (14, 30 ; 14, 82) de l'ensemble de protection, cette position étant telle qu'un utilisateur peut séparer les deux parties l'une de l'autre sans outil.

12. Système selon l'une des revendications 1 à 11, **caractérisé en ce que** la surface externe de ladite au moins une partie de l'ensemble de protection (10 ; 80) est convexe et lisse.

13. Système selon l'une des revendications 1 à 12, **caractérisé en ce que** le logement central (52) a une forme générale de cuvette ayant une surface interne qui est lisse.

14. Procédé de déverrouillage magnétique d'un ensemble (10 ; 80) de protection contre le vol d'un article emballé ou non, **caractérisé en ce que** l'ensemble de protection comprend deux parties (14, 30 ; 14, 82) verrouillées l'une à l'autre par insertion axiale d'une pointe (16) d'une première partie (14) dans un orifice (32b) d'une deuxième partie (30 ; 82) qui comporte des moyens de verrouillage (35, 37, 38) de la pointe insérée, la deuxième partie (82) présentant au moins une ouverture (86) distincte de l'orifice pour recevoir la pointe de la première partie et l'y maintenir, le procédé comprenant les étapes suivantes :
- positionnement d'au moins une partie de l'ensemble de protection attaché à l'article sur une surface de déverrouillage (4a) d'un dispositif de déverrouillage magnétique (1) qui comprend au moins un aimant permanent (4, 5, 6),
- stabilisation mécanique de ladite au moins une partie de l'ensemble suivant une orientation prédéterminée, ladite orientation prédéterminée permettant au champ magnétique (B) qui est généré par ledit au moins un aimant permanent, perpendiculairement à la surface de déverrouillage, de déverrouiller magnétiquement les deux parties de l'ensemble de protection,
- déverrouillage magnétique de l'ensemble de protection,
- séparation des deux parties de l'ensemble de protection par soulèvement de la première partie (14), la deuxième partie (30 ; 82) restant en position stabilisée mécaniquement,
- retrait de l'article,
le procédé comprenant en outre les étapes suivantes :
- insertion axiale de la pointe (16) de la première partie (14) dans ladite au moins une ouverture (86) de la deuxième partie (82) stabilisée mécaniquement jusqu'à obtenir une position axiale de la pointe insérée pour laquelle les deux parties sont assemblées mécaniquement l'une à l'autre de façon non verrouillée,
- préhension de la première partie (14) et soulèvement de celle-ci, entrainant ainsi dans ce mouvement la deuxième partie (82) assemblée avec la première partie.

15. Procédé selon la revendication 14, **caractérisé en ce que** la deuxième partie (82) est maintenue en position stabilisée mécaniquement dans un logement (52) dont la forme est sensiblement complémentaire de la forme extérieure de ladite deuxième partie, rendant ainsi difficile son extraction.

16. Procédé selon la revendication 14 ou 15, **caractérisé en ce que** lorsque la pointe (16) de la première partie (14) est insérée axialement dans ladite au moins une ouverture (86), la première et la deuxième partie sont décalées transversalement l'une par rapport à l'autre par référence à une position dite axiale de verrouillage dans laquelle les deux parties sont alignées axialement l'une avec l'autre lorsque la pointe est insérée axialement dans l'orifice (32b).

## Patentansprüche

1. Magnetisches Entriegelungssystem, umfassend:
- eine Diebstahlschutzeinrichtung (10, 80) für einen verpackten oder nicht verpackten Artikel, wobei die Einrichtung zwei Teile (14, 30, 14, 82) umfasst, die miteinander verriegelt sind durch axiale Einführung einer Spitze (16) eines ersten Teils in eine Öffnung (32b) eines zweiten Teils (30, 82), der Mittel (35, 37, 38) zur Verriegelung der eingeführten Spitze umfasst,
- eine magnetische Vorrichtung (1) zur Entriegelung der Schutzeinrichtung (10), umfassend:
• ein Gehäuse (3), das mindestens einen Permanentmagneten (4, 5, 6) einschließt,
• eine Entriegelungsfläche (4a), die mit Mitteln (50) zur Aufnahme und mechanischen Stabilisation der Einrichtung (10, 80) versehen ist, wobei die Mittel derart konstruiert sind, dass sie mindestens den zweiten Teil der Einrichtung (10, 80) aufnehmen und diesen in einer vorgegebenen Ausrichtung stabilisieren, wobei die vorgegebene Ausrichtung es dem Magnetfeld (B), das vom mindestens einen Permanentmagneten, senkrecht zur Entriegelungsfläche, erzeugt wird, ermöglicht, die beiden Teile der Schutzeinrichtung magnetisch zu entriegeln,
- wobei die Mittel zur Aufnahme und mechanischen Stabilisierung ein zentrales Gehäuse (52) zur Aufnahme mindestens des zweiten Teils (30, 82) der Schutzeinrichtung definieren, wobei die Form des Gehäuses die mindestens des zweiten Teils der Schutzeinrichtung ergänzt, **dadurch gekennzeichnet, dass** der zweite Teil (82) mindestens eine Öffnung (86) aufweist, die sich von der Öffnung (32b) unterscheidet, um die Spitze (16) des ersten Teils aufzunehmen und diese festzuhalten, sodass man nur den ersten Teil der Einrichtung halten muss, um beide Teile zu heben.

2. System nach Anspruch 1, **dadurch gekennzeichnet, dass** das Gehäuse einen Boden (52a), das der Entriegelungsfläche gegenüberliegend angeordnet ist, und eine dem Boden gegenüberliegende Öffnung (52b) aufweist, wobei Boden und Öffnung in einer axialen Richtung (Z), senkrecht zur magnetischen Entriegelungsfläche (4a), einander gegenüberliegend angeordnet sind.

3. System nach Anspruch 1 oder 2, **dadurch gekennzeichnet, dass** die Aufnahme- und Stabilisationsmittel mindestens eine ringförmige Wand (54) aufweisen, die das zentrale Gehäuse mindestens teilweise abgrenzt.

4. System nach einem der Ansprüche 1 - 3, **dadurch gekennzeichnet, dass** das zentrale Gehäuse (52) einen gebohrten Boden (52a) aufweist, der unmittelbar auf die magnetische Entriegelungsfläche (4a) mündet.

5. System nach einem der Ansprüche 1 - 4, **dadurch gekennzeichnet, dass** die Mittel zur Aufnahme und mechanischen Stabilisation abnehmbar oder fest auf der Entriegelungsfläche (4a) montiert sind.

6. System nach einem der Ansprüche 1 - 5, **dadurch gekennzeichnet, dass** die Mittel zur Aufnahme und mechanischer Stabilisation einstückig ausgebildet sind.

7. System nach einem der Ansprüche 1 - 6, **dadurch gekennzeichnet, dass** die Schutzeinrichtung (10, 80) ein System zur Verriegelung der beiden Teile, die die Verriegelungsmittel (35, 37, 38) umfassen, die durch Verschiebung der Verriegelungsmittel entlang einer Entriegelungsachse (A1) unter der Einwirkung eines gleichachsigen Magnetfelds magnetisch entriegelt werden können.

8. System nach Anspruch 7, **dadurch gekennzeichnet, dass** die Mittel zur Aufnahme und mechanischen Stabilisation derart konfiguriert sind, dass sie die Entriegelungsachse (A1) der Verriegelungsmittel parallel zur Achse des Magnetfelds (B) ausrichten, das vom mindestens einen Permanentmagneten der magnetischen Entriegelungsvorrichtung erzeugt wird.

9. System nach einem der Ansprüche 1 - 8, **dadurch gekennzeichnet, dass** die Verriegelungsmittel (35, 37, 38) des zweiten Teils (30) mindestens ein Element (35) aus magnetischem Material umfassen, das mit der eingeführten Spitze (16) zusammenwirkt, um zu verhindern, dass diese axial zurückgezogen wird.

10. System nach Anspruch 9, **dadurch gekennzeichnet, dass** der zweite Teil (30, 82) umfasst: einen ersten Abschnitt (32), der mit der Öffnung (32b) zur axialen Einführung der Spitze des ersten Teils in den zweiten Teil versehen ist, und einen zweiten Abschnitt (34), in den sich die eingeführte Spitze mindestens teilweise erstreckt und darin verriegelt ist.

11. System nach Anspruch 10, **dadurch gekennzeichnet, dass** der erste Abschnitt (32) die mindestens eine Öffnung (86), die sich von der Öffnung (32b) unterscheidet, zur Einführung der Spitze des ersten Teils (14) in einen hohlen Abschnitt des zweiten Teils (30, 82) aufweist, wobei der hohle Abschnitt derart konstruiert ist, dass er die Spitze (16) aufnimmt und diese in einer nicht verriegelten Montagestellung der beiden Teile (14, 30, 14, 82) der Schutzeinrichtung festhält, wobei diese Stellung derart ist, dass ein Nutzer die beiden Teile werkzeugfrei voneinander trennen kann.

12. System nach einem der Ansprüche 1 - 11, **dadurch gekennzeichnet, dass** die Außenfläche des mindestens einen Teils der Schutzeinrichtung (10, 80) konvex und glatt ist.

13. System nach einem der Ansprüche 1 -12, **dadurch gekennzeichnet, dass** das zentrale Gehäuse (52) im Allgemeinen schüsselförmig ist und eine glatte Innenfläche aufweist.

14. Verfahren zum magnetischen Entriegeln einer Diebstahlschutzeinrichtung (10, 80) für einen verpackten oder nicht verpackten Artikel, **dadurch gekennzeichnet, dass** die Einrichtung zwei Teile (14, 30, 14, 82) umfasst, die miteinander verriegelt sind durch axiale Einführung einer Spitze (16) eines ersten Teils (14) in eine Öffnung (32b) eines zweiten Teils (30, 82), der Mittel (35, 37, 38) zur Verriegelung der eingeführten Spitze umfasst, wobei der zweite Teil (82) mindestens eine Öffnung (86) aufweist, die sich von der Öffnung unterscheidet, um den ersten Teil aufzunehmen und darin festzuhalten, wobei das Verfahren folgende Schritte umfasst:
- Positionieren mindestens eines Teils der am Artikel befestigten Schutzeinrichtung auf einer Entriegelungsfläche (4a) einer magnetischen Entriegelungsvorrichtung (1), die mindestens einen Permanentmagneten (4, 5, 6) umfasst,
- mechanisches Stabilisieren des mindestens einen Teils der Einrichtung in einer vorgegebenen Ausrichtung, wobei die vorgegebene Ausrichtung es dem Magnetfeld (B), das vom mindestens einen Permanentmagneten, senkrecht zur Entriegelungsfläche, erzeugt wird, ermöglicht, die beiden Teile der Schutzeinrichtung magnetisch zu entriegeln,
- magnetisches Entriegeln der Schutzeinrichtung,
- Trennen der beiden Teile der Schutzeinrichtung durch Anheben des ersten Teils (14), wobei der zweite Teil (30, 82) in einer mechanisch stabilisierten Stellung bleibt,
- Zurückziehen des Artikels,
wobei das Verfahren ferner folgende Schritte umfasst:
- axiales Einführen der Spitze (16) des ersten Teils (14) in die mindestens eine Öffnung (86) des mechanisch stabilisierten zweiten Teils (82), bis eine axiale Position der eingeführten Spitze erreicht wird, in der die beiden Teile ohne Verriegelung mechanisch miteinander verbunden sind,
- Greifen und Anheben des ersten Teils (14), wobei von dieser Bewegung der mit dem ersten Teil zusammengefügte zweite Teil (82) mitgeführt wird.

15. Verfahren nach Anspruch 14, **dadurch gekennzeichnet, dass** der zweite Teil (82) durch mechanische Stabilisation in einem Gehäuse (52) festgehalten wird, dessen Form im Wesentlichen die äußere Form des zweiten Teils ergänzt, wodurch dessen Entnahme erschwert wird.

16. Verfahren nach Anspruch 14 oder 15, **dadurch gekennzeichnet, dass**, wenn die Spitze (16) des ersten Teils (14) axial in die mindestens eine Öffnung (86) eingeführt wird, der erste und zweite Teil relativ zueinander quer zu einer sog. axialen Verriegelungsstellung versetzt werden, in der die beiden Teile axial miteinander ausgerichtet sind, wenn die Spitze axial in die Öffnung (32b) eingeführt wird.

## Claims

1. A magnetic unlocking system, including:
- a system (10,80) protecting against the theft of a packaged or unpackaged article, the system comprising two parts (14, 30 ; 14, 82) locked to each other by axial insertion of a spike (16) of a first part in an orifice (32b) of a second part (30; 82) that includes means for locking the inserted spike,
- a device (1) for magnetically unlocking the protection system (10) that includes:
• a casing (3) enclosing at least one permanent magnet (4, 5, 6),
• an unlocking surface (4a) provided with means (50) for reception and mechanical stabilization of the system (10), said means being designed to receive at least the second part of the system (10, 80) and to stabilize it in a predetermined orientation, said predetermined orientation enabling the magnetic field (B) that is generated by said at least one permanent magnet, perpendicularly to the unlocking surface, to unlock magnetically the two parts of the protection system,
- the receiving and mechanical stabilization means defining a central housing (52) to receive at least the second part (30 ; 82) of the protection system, the shape of said housing being substantially complementary to that of said at least second part of the protection system, **characterized in that** the second part (82) has at least one opening (86) separate from the orifice (32b) for receiving the spike (16) of the first part and retaining it there so as to be able to raise the two parts of the system holding only the first part.

2. The system as claimed in claim 1, **characterized in that** the housing has a bottom (52a) facing the unlocking surface and an opening (52b) on the side opposite the bottom, the bottom and the opening being disposed opposite each other in an axial direction (Z) perpendicular to the magnetic unlocking surface (4a).

3. The system as claimed in either claim 2 or 3, **characterized in that** the receiving and stabilization means include at least one annular wall (54) at least partly delimiting the central housing.

4. The system as claimed in any one of claims 1 to 3, **characterized in that** the central housing (52) has a bottom (52a) that is pierced and opens directly on the magnetic unlocking surface (4a).

5. The system as claimed in any one of claims 1 to 4, **characterized in that** the receiving and mechanical stabilization means are mounted on the unlocking surface (4a) in a removable or fixed manner.

6. The system as claimed in any one of claims 1 to 5, **characterized in that** the receiving and mechanical stabilization means are formed in one piece.

7. The device as claimed in any one of claims 1 to 6, **characterized in that** the protection system includes a system for locking the two parts including the locking means (35, 37, 38) that are unlockable magnetically by movement of said means along a so-called unlocking axis (A1) by the action of a magnetic field with the same axis.

8. The system as claimed in claim 7, **characterized in that** the receiving and mechanical stabilization means are configured to orient the unlocking axis (A1) of the locking means in a direction parallel to the axis of the magnetic field (B) generated by said at least one permanent magnet of the magnetic unlocking device.

9. The system as claimed in any one of claims 1 to 8, **characterized in that** the locking means (35, 37, 38) of the second part (30) include one or more magnetic material elements (35) cooperating with the inserted spike (16) in order to prevent the axial withdrawal thereof.

10. The system as claimed in claim 9, **characterized in that** the second part includes a first portion (32) including the orifice (32b) for the axial insertion of the spike of the first part in said second part and a second portion (34) in which the inserted spike extends at least in part and is locked.

11. The system as claimed in claim 10, **characterized in that** the first portion (32) includes said at least one opening (86) separate from the orifice (32b) for inserting the spike of the first part (14) in a hollow portion of the second portion (30 ; 82), the hollow portion being designed to receive the spike (16) and to retain it in an unlocked so-called assembly position of the two parts (14, 30 ; 14, 82) of the protection system, this position being such that a user is able to separate the two parts from each other without tools.

12. The system as claimed in any one of claims 1 to 11, **characterized in that** the external surface of said at least one part of the protection system (10 ; 80) is convex and smooth.

13. The system as claimed in any one of claims 1 to 12, **characterized in that** the central housing (52) has a cup general shape having an internal surface that is smooth.

14. A method of magnetically unlocking a system (10 ; 80) for protecting a packaged or unpackaged article against theft, **characterized in that** the protection system comprises two parts (14, 30 ; 14, 82) locked to each other by axial insertion of a spike (16) of a first part (14) in an orifice (32b) of a second part (30 ; 82) that includes means for locking (35, 37, 38) the inserted spike, the second part (82) including at least one opening (86) separate from the orifice for receiving the spike of the first part and retaining it there, the method including the following steps:
- positioning at least one part of the protection system attached to the article on an unlocking surface (4a) of a magnetic unlocking device (1) that includes at least one permanent magnet (4, 5, 6),
- mechanical stabilization of said at least part of the system in a predetermined orientation, said predetermined orientation enabling the magnetic field (B) that is generated by said at least one permanent magnet, perpendicularly to the unlocking surface, to unlock magnetically the two parts of the protection system,
- magnetic unlocking of the protection system,
- separation of the two parts of the protection system by raising the first part (14), the second part (30 ; 82) remaining in a mechanically stabilized position,
- removing the article,
the method further including the following steps:
- axial insertion of the spike (16) of the first part (14) in said at least one opening (86) of the mechanically stabilized second part (82) until an axial position of the inserted spike is reached in which the two parts are assembled mechanically to each other in an unlocked manner,
- grasping the first part (14) and raising it, therefore entraining in this movement the second part (82) assembled with the first part.

15. The method as claimed in claim 14, **characterized in that** the second part (82) is retained in a mechanically stabilized position in a housing (52) the shape of which is substantially complementary to the exterior shape of said second part, thereby rendering its extraction difficult.

16. The method as claimed in claim 14 or 15, **characterized in that** when the spike (16) of the first part (14) is inserted axially in said at least one opening (86), the first and second parts are offset transversely relative to each other with respect to a so-called axial locking position in which the two parts are axially aligned with each other when the spike is inserted axially in the orifice.
